Europäisches Patentamt

European Patent Office

Office européen des brevets

(19)

(11) Veröffentlichungsnummer : **0 023 036**
**B1**

(12) **EUROPÄISCHE PATENTSCHRIFT**

(45) Veröffentlichungstag der Patentschrift :
05.10.83

(21) Anmeldenummer : 80104196.3

(22) Anmeldetag : 17.07.80

(51) Int. Cl.³ : **A 61 C 17/04**

(54) **Zahnärztliche Absaugeinrichtung.**

(30) Priorität : 23.07.79 DE 2929804

(43) Veröffentlichungstag der Anmeldung :
28.01.81 Patentblatt 81/04

(45) Bekanntmachung des Hinweises auf die Patenterteilung : 05.10.83 Patentblatt 83/40

(84) Benannte Vertragsstaaten :
**AT CH FR GB IT LI SE**

(56) Entgegenhaltungen :
**DD A 24 272
DE A 1 766 315
DE A 2 713 321
DE B 1 766 167
DE B 2 342 543
DE C 968 181
GB A 1 106 858
GB A 1 438 242
US A 3 847 573**

(73) Patentinhaber : **SIEMENS AKTIENGESELLSCHAFT
Berlin und München Wittelsbacherplatz 2
D-8000 München 2 (DE)**

(72) Erfinder : **Kratochwilla, Hans-Michael
Landgrafenstrasse 15
D-6140 Bensheim (DE)**
Erfinder : **Liefke, Johannes
Riedstrasse 15
D-6140 Bensheim (DE)**

Jouve, 18, rue St-Denis, 75001 Paris, France

Zahnärztliche Absaugeinrichtung

Die Erfindung bezieht sich auf eine zahnärztliche Absaugeinrichtung mit einer Saugpumpe, an der eine Saugleitung mit einer Saugdüse zum Absaugen von flüssigen und festen Teilchen angeschlossen ist unter Zwischenschaltung eines als Zyklon-Abscheider ausgebildeten Separierbehälters, in welchem die abgesaugten Teilchen von der Saugluft getrennt werden und welcher einen in eine Abflußleitung mündenden Abflußkanal aufweist.

Bei herkömmlichen Absaugeinrichtungen wird die abgesaugte Flüssigkeit im Separierbehälter so lange angesammelt, bis der Saugvorgang beendet bzw. ein bestimmter Flüssigkeitsstand im Behälter erreicht ist. Das Entleeren des Behälters erfolgt dann bei Druckausgleich des Behälters automatisch über ein Membranventil, indem entweder die Saugpumpe abgeschaltet, oder die zur Saugpumpe führende Saugleitung mittels eines Absperrventils abgesperrt wird.

Nachdem der Behälter aus Einbauplatzgründen nicht so groß dimensioniert werden kann, um auch bei längerem Saugbetrieb, bzw. bei größeren Saugmengen die Flüssigkeit ohne Unterbrechung des Saugbetriebes aufnehmen zu können, muß bie dieser Bauart u. U. ein häufigeres Unterbrechen des Saugbetriebes zum Zwecke der Entleerung des Behälters in Kauf genommen werden. Hinzu kommt ein weiterer Nachteil, nämlich, daß der Behälter praktisch täglich geöffnet und von einer Bedienungsperson unter Einsatz spezieller Reinigungs- und Desinfektionsmittel gereinigt werden muß.

Diese Nachteile sind zwar bei einer anderen bekannten Absaugeinrichtung (DE-A-2 713 321) nicht gegeben, weil hier ein Abfließen der Flüssigkeit während des Betriebes möglich ist; hierzu ist jedoch ein relativ kompliziertes, konstruktiv sehr aufweniges Ventil- und Schleusensystem notwendig.

Der Separierbehälter, in den das aus flüssigen und festen Teilchen sowie aus Saugluft bestehende Gemisch tangential eintritt, enthält einen Zykloneinsatz, der ein schraubenförmiges Nachuntenbewegen des Gemisches bewirkt. Den flüssigen und festen Teilchen wird also eine zyklonartige Rotationsbewegung aufgezwungen; die Teilchen werden dabei infolge der starken Fliehkräfte nach außen an die Wandung des Separierbehälters gedrängt, wo sie schließlich, von der Saugluft abgetrennt, in den unteren Behälterteil abgleiten. Ein in Drehbewegung versetzter Schwimmer im unteren Behälterteil steuert ein erstes Schleusenventil, welches den unteren Behälterteil mit einem darunter befindlichen Schleusenraum verbindet. Der Schleusenraum ist über ein weiteres Schleusenventil mit dem Abflußkanal verbunden. Die Abdichtung von Schleusenraum und Separierbehälter erfolgt durch elastische Dichtscheiben bzw. Membrane. Das Schleusensystem ist so aufgebaut, daß die Flüssigkeit ständig in kleinen Chargen durchgeschleust und dann in den Abflußkanal gedrückt wird, ohne daß der Saugvorgang selbst unterbrochen zu werden braucht.

Abgesehen davon, daß der konstruktive Aufwand einer solchen Absaugvorrichtung sehr groß ist, sind insbesondere durch die vorgesehenen Dichtscheiben und Membrane, die durch den Schleusenvorgang ständig durchgewalkt werden, störanfällige Verschleißteile vorhanden, die u. U. bewirken können, daß bei nicht ausreichender Abdichtung der Kammern die Vorrichtung nicht mehr zuverlässig arbeitet.

Aufgabe der Erfindung ist es, eine demgegenüber insbesondere konstruktiv einfachere Absaugeinrichtung anzugeben, mit der bei relativ kleinen Behälterabmessungen auch größere Flüssigkeitsmengen ohne Unterbrechung des Saugbetriebes abgesaugt werden können. Die Absaugeinrichtung soll unter Vermeidung von dem Verschleiß besonders stark unterworfenen Dichtungsscheiben und Ventilmembranen weitgehend wartungsfrei funktionieren.

Zur Lösung der gestellten Aufgabe wird bei einer Absaugeinrichtung der eingangs genannten Gattung vorgeschlagen, in den vom Separierbehälter zur Abflußleitung führenden Abflußkanal eine Hilfspumpe anzuordnen, welche gegen den Unterdruck der Saugpumpe wirkt und mit demgegenüber höheren Druck die im Separierbehälter sich ansammelnden Teilchen in die Abflußleitung drückt.

Die Kombination von Zyklon-Abscheider und Hilfspumpe, die eine Wasserstrahlpumpe, vorteilhafterweise aber eine Kreiselpumpe sein kann, führt zu einem baulich sehr einfachen Absaugsystem. Der Separierbehälter braucht keine komplizierten Ventil- und Schleusensysteme aufzuweisen. Die Anordnung der Hilfspumpe hat außerdem den Vorteil, daß bei kontinuierlichem Saugbetrieb größere Flüssigkeitsmengen abgesaugt werden können, ohne daß das Füllstandssystem zwischenzeitlich abgeschaltet werden muß. Eventuell bei sehr großen abzusaugenden Flüssigkeitsmengen (z. B. bei Spülvorgängen) eintretende Abschaltzeiten sind infolge der erheblich größeren Fördermenge der Hilfspumpe bedeutend kürzer als bei dem bisherigen Absaugsystem, wo die Flüssigkeit nur infolge der vorhandenen Druckdifferenz zwischen Separierbehälter und dem Abflußsystem abfließen kann.

Ein weiterer wesentlicher Vorteil ist, wie gemäß einer Weiterbildung der Erfindung vorgeschlagen wird, in der Möglichkeit der Reinigung der Einrichtung zu sehen. Das gesamte Absaugsystem kann durch bloßes Umstecken der Saugdüse auf einen entsprechend vorgesehenen Anschluß einer Spülleitung durchgespült und eventuell mit Reinigungs- oder Desinfektionsmittel gereinigt werden.

Ein Ausführungsbeispiel der Erfindung wird nachfolgend anhand der Zeichnung näher erläutert. Es zeigen:

Fig. 1 die erfindungsgemäße Absaugeinrichtung in einer schematischen Darstellung,

Fig. 2 eine Ausführungsform eines Separierbehälters im Schnitt.

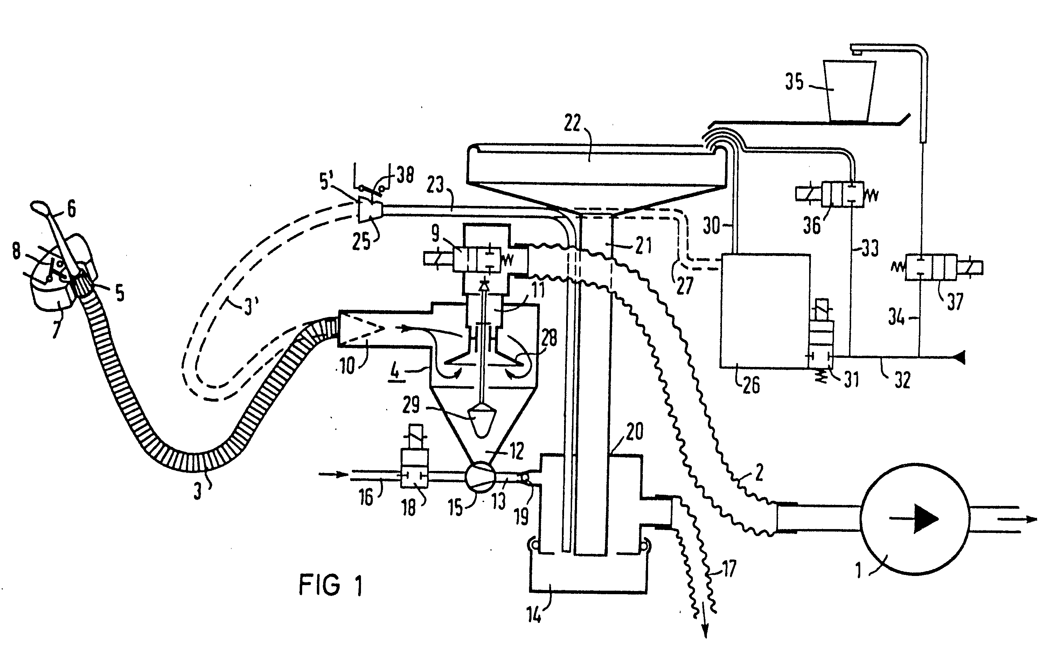

Die Fig. 1 zeigt in einer Prinzipdarstellung eine zahnärztliche Absaugeinrichtung mit einer elektromotorisch angetriebenen Saugpumpe 1 an der saugseitig eine aus zwei Abschnitten 2, 3 bestehende Saugleitung angeschlossen ist. Zwischen den Saugleitunsabschnitten 2, 3 ist ein später noch näher erläuterter Separierbehälter 4 geschaltet, in dem die von einer Saugdüse 5 mit aufgesetztem Saughandstück 6 z. B. aus einem Patientenmund abgesaugten flüssigen und festen Teilchen von der Saugluft separiert werden. Die Saugdüse 5 mit dem Saughandstück 6 ist in einer Ablageklaue 7 gehaltert, in der ein Schalter 8 angeordnet ist, mit dem die Saugpumpe 1, bzw. ein zwischen Separierbehälter 4 und Saugleitungsabschnitt 2 geschaltetes Ventil 9 geschaltet wird. Als Separierbehälter 4 ist ein an sich bekannter Zyklon-Abscheider mit tangentialem Einlaßkanal 10 vorgesehen, der einen oberhalb des Behälters ausmündenden Auslaßkanal 11, der mit dem Saugleitungsabschnitt 2 verbunden ist, aufweist. Am Behälterboden des Separierbehälters 4 schließt sich ein Abflußkanal 12 an, der über einen Abflußkanalabschnitt 13 mit einem als Siphon wirkenden Behälter 14 verbunden ist. In den Abflußkanal 12 ist eine Wasserstrahlpumpe 15 eingebaut, der über eine Leitung 16 Frischwasser zugeführt wird. Mit Hilfe der Wasserstrahlpumpe 15 wird die sich am Behälterboden des Separierbehälters 4 ansammelnde Flüssigkeit abgesaugt, und über den Leitungskanalabschnitt 13 in den Siphon 14 und von dort in die Abflußleitung 17 gedrückt. Die Wasserstrahlpumpe 15 ist so dimensioniert, daß sie einen höheren Unterdruck erzeugt als die Saugpumpe 1, wodurch ein ständiges Absaugen der Flüssigkeit aus dem Behälter 4 während des Saugbetriebes gegeben ist. Die Saugwirkung der Wasserstrahlpumpe kann über ein Magnetventil 18 gesteuert werden. Mit 19 ist ein im Abflußkanalabschnitt 13 angeordnetes Rückschlagventil bezeichnet, mit dem ein Zurücksaugen von Flüssigkeit aus der Abflußleitung 17 verhindert wird.

Der Behälter 14 enthält deckseitig eine Öffnung 20 in die die Abflußleitung 21 einer Speischale 22 mündet. Außerdem führt in den Behälter 14 eine Spülleitung 23 hinein. Die Spülleitung 23 endet an einer vom Benutzer des Saughandstückes leicht zugänglichen Stelle und weist dort einen Anschluß 25 auf, der so ausgebildet ist, daß die Saugdüse 5 aufgesteckt werden kann (siehe gestrichelte Darstellung der Saugleitung 3'). Die Spülleitung 23 kann anstelle in den Behälter 14 direkt in einen Reinigungsmittel enthaltenden Behälter 26 münden, wie dies durch die gestrichelte Leitung 27 angedeutet ist.

Der Separierbehälter 4 weist ferner noch ein Formteil 28 zur Umlenkung der abströmenden Saugluft, sowie einen in der nachfolgenden Figur noch näher erläuterten, im Auslaßkanal 11 entsprechend geführten Schwimmer 29 auf.

In der Speischale 22 mündet eine Zufuhrleitung 30 für das Reinigungsmittel, welches aus dem Behälter 26 mittels Druckwasser, gesteuert über ein Magnetventil 31, aus einer Druckwasserleitung 32 in die Speischale 22 und von dort in die Abflußleitung 21 in den Siphon 14 gedrückt wird. Mit 33 und 34 sind zwei von der Druckwasserleitung 32 abzweigende Leitungen bezeichnet, mit denen einerseits eine Spülung der Speischale 22 erzielt und andererseits ein Mundspülglas 35 gefüllt werden kann. Die Steuerung erfolgt über Magnetventile 36 bzw. 37. Das Magnetventil 31 zur Steuerung der Zufuhr von Reinigungsmittel aus dem Behälter 26, wird über einen Schaltkontakt 38 am Anschluß 25 der Spülleitung 23 geschaltet. Gegebenenfalls wird über den Schaltkontakt 38 auch das Ventil 36 zur Spülung bzw. Nachspülung der Speischale 22 geschaltet.

Der Saugbetrieb funktioniert wie folgt:

Bei Entnahme der Saugdüse 5 mit dem Saughandstück 6 aus der Ablageklaue 7 schaltet sich über den Schaltkontakt 8 die Saugpumpe 1 und das Ventil 9 sowie über das Magnetventil 18 die Wasserstrahlpumpe 15 ein. Das abgesaugte Gut wird über die Saugleitung 3 tangential in den Separierbehälter 4 eingebracht. Durch die Fliehkraft der so erzeugten rotierenden Strömung werden die schwereren Teile an die Wandung des Behälters gepreßt und laufen zyklonartig nach unten in den Abflußkanal 12 ab. Der Luftstrom wird, wie durch die Pfeile. angegeben, an dem Formteil 28 umgelenkt und über den Auslaßkanal 11 und das Ventil 9 in den Saugleitungsabschnitt 2 und von dort schließlich zur Pumpe 1 geführt. Die abgeschiedene Flüssigkeit und die schwereren Teile werden mittels der Hilfspumpe 15, die einen höheren Unterdruck als die Saugpumpe 1 erzeugt, in die Abflußleitung 17 gedrückt. Das von der Speischale in den Siphon 14 fließende Abwasser läuft ebenfalls in die Abflußleitung 17.

Ist die abgesaugte Flüssigkeitsmenge zu groß für die Wasserstrahlpumpe 15, so wird durch den ansteigenden Flüssigkeitsspiegel über den Schwimmer 29 das Ventil 9 geschaltet, wodurch der Auslaßkanal 11 geschlossen wird; aber nur solange, bis der Flüssigkeitsspiegel wieder abgesunken ist. In der Praxis sind dies nur wenige Sekunden. Während dieser Zeit saugt die Wasserstrahlpumpe 15 weiter.

Der Reinigungsvorgang funktioniert wie folgt:

Die Saugdüse 5' wird bei abgenommenen Saughandstück 6 an den Anschluß 25 aufgesteckt. Dabei wird über den Schaltkontakt 38 das Magnetventil 31 aktiviert, wodurch über den Druckwasseranschluß 32 Reinigungsmittel . aus dem Behälter 26 in die Speischale 22 gedrückt wird, von wo aus es über den Leitungskanal 21 in den Siphon 14 gelangt. Nachdem bei Entnahme der Saugdüse 5 aus der Ablageklaue 7 auch die Saugpumpe 1 eingeschaltet wird, wird das Reinigungsmittel, das gegebenenfalls mit Spülwasser aus der Leitung 32 vermischt sein kann, zunächst über die Spülleitung 23 aus dem Siphon 14, dann über den Saugleitungsabschnitt 3' in den Separierbehälter 4 gesaugt, wo es, wie oben beschrieben, mittels der Hilfspumpe 15 schließlich in den Abfluß gedrückt wird. Auf diese Weise wird praktisch das gesamte System durchgespült und gereinigt. Der Reinigungsvorgang kann über ein mit dem Schaltkontakt 38 aktiviertes Zeitschaltwerk zeitlich begrenzt werden.

Denkbar ist auch eine Ausführungsform, bei der das Reinigungsmittel aus dem Behälter 26 über die Leitung 27 direkt in die Spülleitung 23 gesaugt wird. Hierbei wird jedoch nicht die Abflußleitung 21 der Speischale 22 mitgereinigt.

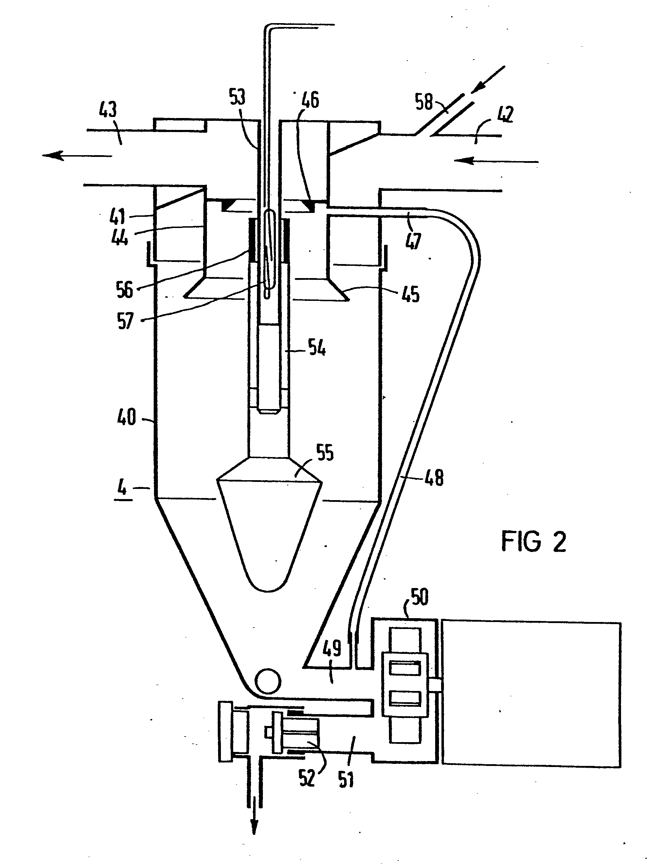

Die Fig. 2 zeigt eine etwas modifizierte Ausführungsform des Separierbehälters 4 in Verbindung mit einer Kreiselpumpe als Hilfspumpe. Der Separierbehälter 4 besteht im wesentlichen aus einem zylindrischen, nach unten hin konisch sich verjüngenden unteren Behälterteil 40 und einem abnehmbar darauf befestigten oberen Behälterteil 41 mit einem tangential einmündenden Einlaßkanal 42 und einem etwa in gleicher Höhe ausmündenden Auslaßkanal 43, der nach Fig. 1 mit dem Saugleitungsabschnitt 2 der Saugpumpe zu verbinden ist. Das Behälteroberteil 41 enthält einen zentrisch angeordneten, nach unten gerichteten Stutzen 44 mit einer Umlenkkante 45 und einer Staudruckblende 46. Unmittelbar — in Strömungsrichtung gesehen — vor der Staudruckblende 46 mündet ein Anschluß 47 einer By-Pass-Leitung 48. Der andere Anschluß der By-Pass-Leitung 48 mündet in den Abflußkanal 49, der gleichsam der saugseitige Kanal einer Kreiselpumpe 50 ist, deren druckseitiger Leitungskanal 51 in die in Fig. 1 gezeigte Abflußleitung 17 mündet. An der Staudruckblende 46 wird die im Stutzen 44 spiralförmig nach oben abströmende Luft leicht angestaut, wodurch sich evtl. mitgerissene Wassertröpfchen an den Wandungen des Stutzens 44 ansammeln können, die dann über die By-Pass-Leitung 48 durch den von der Hilfspumpe 50 erzeugten Unterdruck abgesaugt werden. Damit ist gewährleistet, daß der Feuchtigkeitsgehalt der abgesaugten Luft nicht zu hoch, die Luft also nicht übersättigt wird.

Im druckseitigen Leitungskanal 51 ist ein Rückschlagventil 52 angeordnet, mit dem, wie bereits bei der Ausführung nach Fig. 1 erläutert, ein Rücksaugen von abgeflossener Flüssigkeit aus der Abflußleitung 17 verhindert werden soll. Die Pumpe 50 dichtet erst dann ab, wenn sie mit Flüssigkeit gefüllt ist. Bis zum Erreichen der Pumpwirkung verhindert das Rückschlagventil 52, daß Flüssigkeit aus der Abflußleitung 17 angesaugt wird.

Im Behälteroberteil 41 ist konzentrisch zu dem Stutzen 44 ein Rohr 53 angeordnet, über das teleskopartig ein zweites Rohr 54, an dem ein Schwimmer 55 befestigt ist, verschiebbar geführt ist. Das Rohr 54 ist an seinem oberen Ende mit einem Permanentmagneten 56 versehen, der mit einem entsprechenden Schaltelement (Reed-Kontakt) zusammenwirkt, das im festen Rohr 53 angeordnet ist. Normalerweise befindet sich der Schwimmer 55 in der gezeichneten (unteren) Stellung, und der Permanentmagnet 56 in Höhe des Schaltelements 57. Der Schaltkontakt ist dann geschlossen und die Saugleitung (über das Ventil 9) aktiviert. Bei zu großer zugeführter Flüssigkeitsmenge oder bei einem Defekt im Abflußsystem wird der Schwimmer 55 angehoben. Der Permanentmagnet 56 verschiebt sich dabei längs des Führungsrohres 53, wodurch der Schaltkontakt des Schaltelements 57 geöffnet und über das Ventil 9 die Saugleitung, welche zur Saugpumpe 1 führt, abgesperrt wird. Nachdem die Kreiselpumpe 50 während dieser Ventil-Absperrphase in Betrieb ist, die im Behälter angesammelte Flüssigkeit also ständig weiter abgesaugt wird, sind evtl. auftretende Absperrzeiten für das Ventil 9 äußerst kurz.

Mit 58 ist ein Anschluß für Spülwasser bezeichnet, mit dem der über den Einlaßkanal 42 abgesaugten Flüssigkeit zusätzlich Spülwasser zugeführt werden kann, um so ein evtl. Festsetzen von abgesaugten Teilchen zu verhindern.

### Ansprüche

1. Zahnärztliche Absaugeinrichtung mit einer Saugpumpe (1), an der eine Saugleitung (2, 3) mit einer Saugdüse (5) zum Absaugen von flüssigen und festen Teilchen angeschlossen ist unter Zwischenschaltung eines als Zyklon-Abscheider ausgebildeten Separierbehälters (4), in welchem die abgesaugten Teilchen von der Saugluft getrennt werden und welcher einen in eine Abflußleitung (17) mündenden Abflußkanal (12, 49) aufweist, dadurch gekennzeichnet, daß in dem vom Separierbehälter (4) in die Abflußleitung (17) führenden Abflußkanal (12, 49) eine Hilfspumpe (15, 50) angeordnet ist, welche gegen den Unterdruck der Saugpumpe (1) wirkt und mit demgegenüber höherem Druck die im Separierbehälter (4) sich ansammelnden Teilchen in die Abflußleitung (17) drückt.

2. Absaugeinrichtung nach Anspruch 1, dadurch gekennzeichnet, daß als Hilfspumpe eine Kreiselpumpe (50) vorgesehen ist und in deren druckseitigen Leitungskanal (51) ein bei vorhandenem Unterdruck im Separierbehälter (4) die Abflußleitung (17) verschließendes und bei wirksam arbeitender Hilfspumpe (50) die Abflußleitung öffnendes Ventil (52) vorgesehen ist.

3. Absaugeinrichtung nach Anspruch 1 oder 2, dadurch gekennzeichnet, daß eine im Querschnitt relativ kleine By-Pass-Leitung (48) vorgesehen ist, deren eines Ende in den Abflußkanal (49) und noch saugseitigen Leitungskanal der Hilfspumpe (50) und deren anderes Ende in den Auslaßkanal (43) des Separierbehälters (4) mündet, welcher mit der zur Saugpumpe (1) führenden Saugleitung (2) verbunden ist.

4. Absaugeinrichtung nach Anspruch 3, dadurch gekennzeichnet, daß im Auslaßkanal (43) des Separierbehälters (4) unmittelbar nach der Mündung (47) der By-Pass-Leitung (48) eine Staudruckblende (46) angeordnet ist.

5. Absaugeinrichtung nach einem der Ansprüche 1 bis 4, dadurch gekennzeichnet, daß der Abflußkanal (12, 49) in einen an die Abflußleitung (17) angeschlossenen Behälter (14), vorzugsweise einen Siphon, mündet, daß der Behälter (14) eine Öffnung (20) zur Zufuhr von Reinigungsmitteln enthält, und daß aus dem Behälter (14) eine Spülleitung (23) führt, deren freies Ende (25) für den Anschluß der Saugdüse (5) ausgebildet ist.

6. Absaugeinrichtung nach Anspruch 5, dadurch gekennzeichnet, daß am freien Ende (25) der Spülleitung (23) ein Schaltkontakt (38) angeordnet ist, der bei Anschluß der Saugdüse (5) ein Ventil (31) zur Zufuhr des Reinigungsmittels betätigt.

7. Absaugeinrichtung nach Anspruch 5, dadurch gekennzeichnet, daß ein separater Reinigungsmittelbehälter (26) vorhanden ist, der eingangsseitig einen Druckwasseranschluß (32) und ausgangsseitig eine in den erstgenannten Behälter (14) führende Leitung (30) zur Zufuhr von Reinigungsmitteln aufweist.

8. Absaugeinrichtung nach Anspruch 7, dadurch gekennzeichnet, daß sie eine Speischale (22) enthält, in der die Leitung (30) aus dem Reinigungsmittelbehälter (26) mündet, und daß die Abflußleitung (21) der Speischale (22) in den erstgenannten Behälter (14) führt.

9. Absaugeinrichtung nach einem der Ansprüche 1 bis 8, dadurch gekennzeichnet, daß dem Separierbehälter (4) in an sich bekannter Weise aus einer separaten Leitung (58) Spülwasser zugeführt wird.

10. Absaugeinrichtung nach einem der Ansprüche 1 bis 9, dadurch gekennzeichnet, daß im Separierbehälter (4) ein Schwimmer (29, 55) angeordnet ist, der bei Überschreiten eines bestimmten Flüssigkeitspegels die Saugpumpe (1) abschaltet oder ein die Saugleitung (1) zur Saugpumpe (1) verschließbares Ventil (9) schließt, und bei Unterschreiten des Flüssigkeitspegels die Saugpumpe (1) wieder einschaltet bzw. das Ventil (9) wieder öffnet.

11. Absaugvorrichtung nach einem der Ansprüche 1 bis 10, dadurch gekennzeichnet, daß die beiden Pumpen (1, 15, 50) gemeinsam, vorzugsweise über eine Ablageklaue (7) für die Saugdüse (5), ein- und ausgeschaltet werden.

12. Absaugvorrichtung nach Anspruch 10, dadurch gekennzeichnet, daß der Schwimmer (55) auf einem Tragrohr (54) befestigt ist, welches auf oder in einem weiteren Rohr (53) teleskopartig geführt ist, und daß eines der beiden Rohre mit einem Permanentmagneten (56) versehen und das andere ein vom Magnetfeld des Permanentmagneten beeinflußbares Schaltelement (57) aufweist, und daß das Schaltelement (57) die Saugpumpe (1) oder ein die Saugleitung (2) zur Saugpumpe (1) verschließendes Ventil (9) schaltet.

## Claims

1. A suction device for use in dentistry having a suction pump (1) to which is connected a suction line (2, 3) having a suction nozzle (5), for the removal by suction of liquid and solid particles with an interposed separating receptacle (4) which is designed as a cyclone precipitator and in which the particles which have been removed by suction are separated from the suction indraft, and which has a discharge channel (12, 49) which opens into a discharge line (17), characterised in that the discharge channel (12, 49) which leads from the separating receptacle (4) into the discharge line (47) contains an auxiliary pump (15, 50) which acts against the reduced pressure of the suction pump, and at a relatively higher pressure forces the particles which accumulate in the separating receptacle (4) into the discharge line (17).

2. A suction device as claimed in Claim 1, characterised in that the auxiliary pump is in the form of a centrifugal pump (50) the pressure-side conveying channel (51) of which, contains a valve (52) which closes the discharge line (17) when reduced pressure prevails in the separating receptacle (4) and which opens the discharge line when the auxiliary pump (50) is activated.

3. A suction device as claimed in Claim 1 or Claim 2, characterised in that a by-pass line (48) of relatively small cross-section is provided, one end of which leads into the discharge channel (49) and the suction side conveying channel of the auxiliary pump (50), and the other end of which leads into the outlet channel (43) of the separating receptacle (4) which is connected to the suction line (2) leading to the suction pump (1).

4. A suction device as claimed in Claim 3, characterised in that a dynamic pressure orifice plate (46) is arranged in the outlet channel (43) of the separating receptacle (4) directly after the inlet (47) of the by-pass line (48).

5. A suction device as claimed in one of Claims 1 to 4, characterised in that the discharge channel (12, 49) opens into a container (14), preferably a syphon, which is connected to the discharge line (17) ; that the container (14) has an opening (20) for the supply of cleansing agents ; and that a rinsing line (23) leads out of the container, the free end (25) of which is adapted for the connection of the suction nozzle (5).

6. A suction device as claimed in Claim 5, characterised in that at the free end (25) of the rinsing line (23), there is arranged a switching contact (38), which, when the suction nozzle (5) is connected, actuates a valve (31) for the supply of the cleansing agent.

7. A suction device as claimed in Claim 5, characterised in that a separate cleansing agent container (26) is provided, which at its inlet end has a pressure water connection (32) and at its outlet end has a line (30) which leads into the first-mentioned container (14) and serves to supply cleansing agents.

8. A suction device as claimed in Claim 7, characterised in that it includes a spittle dish (22) into which the line (30) leads from the cleansing agent container (26) ; and that the discharge line (21) from the spittle dish (22) leads into the first-mentioned container (14).

9. A suction device as claimed in one of Claims 1 to 8, characterised in that the separating receptacle (4) is supplied with rinsing water from a separate line (58), in a manner known *per se*.

10. A suction device as claimed in one of Claims 1 to 9, characterised in that the separating receptacle (4) contains a float (29, 55) which, when the liquid level exceeds a specific value, switches off the suction pump (1), or closes a valve (9) which closes off the suction line (2) to the suction pump (1), and when the liquid level falls below said value, switches on the suction pump (1), or re-opens the valve (9).

11. A suction device as claimed in one of Claims 1 to 10, characterised in that the two pumps (1, 15, 50) are commonly switched on and off, preferably by way of a holding clip (7) for the suction nozzle (5).

12. A suction device as claimed in Claim 10, characterised in that the float (55) is attached to a support pipe (54) which extends telescopically on or in a further pipe (53) ; that one of the two pipes is provided with a permanent magnet (56) and the other pipe has a switching element (57) which can be influenced by the magnetic field of the permanent magnet ; and that the switching element (57) switches the suction pump (1), or a valve (9) which closes off the suction line (2) to the suction pump (1).

**Revendications**

1. Installation d'aspiration dentaire, comprenant une pompe aspirante (1) à laquelle est raccordé un conduit d'aspiration (2, 3) ayant un suceur (5) pour aspirer des particules liquides et solides, avec interposition d'un récipient de séparation (4), agencé en séparateur-cyclone, dans lequel les particules aspirées sont séparées de l'air d'aspiration et qui présente une conduite d'évacuation (12, 49) débouchant dans un conduit d'évacuation (17), caractérisée en ce que dans la conduite d'évacuation (12, 49) menant du récipient de séparation (4) au conduit d'évacuation (17) est disposée une pompe auxiliaire (15, 50), qui agit à l'encontre de la dépression de la pompe aspirante (1) et qui, avec une pression plus élevée que celle-ci, refoule dans le conduit d'évacuation (17) les particules se rassemblant dans le récipient de séparation (4).

2. Installation d'aspiration selon la revendication 1, caractérisée en ce que comme pompe auxiliaire est prévue une pompe centrifuge (50) et dans sa tubulure de refoulement (51) est prévue une soupape (52) fermant le conduit d'évacuation (7) lorsqu'une dépression règne dans le récipient de séparation (4) et ouvrant le conduit d'évacuation lorsque la pompe auxiliaire (50) fonctionne de manière efficace.

3. Installation d'aspiration selon la revendication 1 ou 2, caractérisée en ce qu'il est prévu un conduit de dérivation (48) de section droite relativement petite, dont l'une des extrémités débouche dans la conduite d'évacuation (49) et dans la tubulure encore aspirante de la pompe auxiliaire (50) et dont l'autre extrémité débouche dans la conduite de sortie (43) du récipient de séparation (4), celui-ci communiquant avec le conduit d'aspiration (2) menant à la pompe aspirante (1).

4. Installation d'aspiration selon la revendication 3, caractérisée en ce que dans la tubulure de sortie (43) du récipient de séparation (4) est disposé, directement en aval de l'embouchure (47) du conduit de dérivation (48), un écran contre la pression dynamique (46).

5. Installation d'aspiration selon l'une des revendications 1 à 4, caractérisée en ce que la conduite d'évacuation (12, 49) débouche dans un récipient (14) raccordé au conduit d'évacuation, de préférence dans un siphon, en ce que le récipient (14) a une ouverture (20) pour l'amenée d'agents de nettoyage et en ce que du récipient (14) part un conduit de lavage (23), dont l'extrémité libre est agencée pour le raccordement du suceur (5).

6. Installation d'aspiration selon la revendication 5, caractérisée en ce qu'à l'extrémité libre (25) du conduit de lavage (23) est monté un contact d'interrupteur (38) qui, lors du raccordement du suceur (5), actionne une soupape (31) pour l'amenée de l'agent de nettoyage.

7. Installation d'aspiration selon la revendication 5, caractérisée en ce qu'il y a un récipient (26) distinct pour l'agent de nettoyage, qui présente du côté de l'entrée un raccord (32) pour de l'eau sous pression et du côté de la sortie un conduit (30) menant dans le récipient (14) nommé en premier et destiné à l'amenée d'agents de nettoyage.

8. Installation d'aspiration selon la revendication 7, caractérisée en ce qu'elle comprend une cuvette d'alimentation (22), dans laquelle débouche le conduit (30) provenant du récipient (26) pour l'agent de nettoyage et en ce que le conduit d'évacuation (21) de la cuvette d'évacuation (22) mène au récipient (14) nommé en premier.

9. Installation d'aspiration selon l'une des revendications 1 à 8, caractérisée en ce que de l'eau de lavage est envoyée, d'une manière en soi connue, au récipient de séparation (4) par un conduit (58) distinct.

10. Installation d'aspiration suivant l'une des revendications 1 à 9, caractérisée en ce que dans le récipient de séparation (4) est disposé un flotteur (29, 55) qui, lorsqu'un niveau déterminé de liquide est dépassé, débranche la pompe aspirante (1) ou ferme une soupape (9) pouvant obturer le conduit d'aspiration (2) menant à la pompe aspirante (1) et qui, lorsque le niveau du liquide devient inférieur à la valeur donnée, rebranche la pompe aspirante (1) ou ouvre à nouveau la soupape (9).

11. Installation d'aspiration selon l'une des revendications 1 à 10, caractérisée en ce que les deux pompes (1, 15, 20) sont branchées et débranchées en commun, de préférence par l'intermédiaire d'une patte de serrage (7) du suceur (5).

12. Installation d'aspiration suivant la revendication 10, caractérisée en ce que le flotteur (55) est fixé sur un tube-support (54) qui est guidé télescopiquement sur ou dans un autre tube (53) et en ce que l'un des deux tubes est muni d'un aimant permanent (56) tandis que l'autre présente un élément interrupteur (57) qui peut être influencé par le champ magnétique de l'aimant permanent et en ce que l'élément interrupteur (57) branche la pompe aspirante (1) ou ouvre une soupape (9) fermant le conduit d'aspiration (2) allant à la pompe aspirante (1).

FIG 1

FIG 2